# EUROPEAN PATENT APPLICATION

(11) **EP 1 241 610 A2**
(43) Date of publication of application: **18.09.2002**
(21) Application number: 02100274.6
(22) Date of filing: 18.03.2002
(51) Int. Cl.: G06F 17/60

(54) **Method of e-mail**

(30) Priority: 16.03.2001 US 276177 P
(71) Applicant: Texas Instruments Incorporated, Dallas, Texas 75251 (US)
(72) Inventor: Milovanovic, Rajko, 75093, Plano (US)
(74) Representative: Holt, Michael

(57) **Abstract**

An improved E-mail method is provided that includes a message stage for generating a message, an addressing stage for addressing an envelope for sending the message and a stuff and send step for sending the message wherein the addressing stage is not permitted until the message is proofed and signed and the stuff and send email stage is not permitted until the addressing is listed and approved.

## Description

### Field of Invention

This invention relates to electronic mail or E-mail and more particularly to a new method of generating E-mail.

### Background of Invention

Electronic mail or E-mail is a service that transmits electronic messages from one computer to another. The messages can be short or long and be of various types. The transmission can be over a short distance such as between adjoining offices or over long distances over a global internet network.

Generally, to send an E-mail message via an E-mail system, a user opens an E-mail program module and types a message and other information into an E-mail form. The E-mail form contains a number of fields for the recipients' addresses, the subject of the message and the message itself. The user may also attach separate files to the E-mail message. Before sending the E-mail message, the user must enter the recipient's E-mail address, which is used by the E-mail system to route the message to the intended recipient.

After composing an E-mail message and entering the recipient's addresses, the user sends the message by invoking a "send" command. The E-mail system then sends the message to the recipient. At the recipient's computer, the recipient typically will receive a visual or auditory cue, such as a ringing bell, when an E-mail message has been received in the recipient's inbox. The recipient may then open the E-mail program and view a list of the messages in the inbox. The recipient may view the complete text of a message by selecting and opening that message.

E-mail is becoming increasingly popular because it is a quick, convenient and easy way to exchange information and communicate with others. E-mail offers numerous advantages over other forms of communication. For example, E-mail is less intrusive than a telephone call because the recipient of an E-mail message may wait until a convenient time to retrieve and respond to the message rather than being immediately interrupted. Another advantage of E-mail is the ability to communicate with large groups of people by sending a single E-mail message to multiple recipients. Still another advantage of E-mail is the ability of attaching documents in electronic format to an E-mail message.

E-mail messages are composed in the context of a "form." A form is an object that is used to display a message in a structured format. An E-mail form typically provides a plurality of fields, including an address field, a "From" fields, a "Subject" field, a "cc" field, and a "Body" field. The user of the E-mail system composes the message by entering data into some or all of the fields on the form.

E-mail forms typically incorporate verbs, which are commands that a form is capable of executing. Typical verbs include commands such as reply, forward, open and print. For example, a recipient may generate a reply to an E-mail message by clicking on a reply button. In response to the reply command, the E-mail program carries out the instructions associated with the "reply" verb. This includes copying the data in the address field of the incoming message to the "From" field of the reply, copying the data in the "From" field of the incoming message to the address field of the reply, and adding "Re:" before the data in the "Subject" field.

E-mails are often sent to wrong addresses or unfinished letters are often sent. This often occurs with serious consequences with letters or messages going to wrong parties that should not receive the messages. There are many "OOPs" messages sent. The current system makes it easy to add a wrong addressee or to send an unfinished letter or message. It is an object of the present invention to provide an E-mail system and method that is less likely to have this problem.

### Summary of Invention

In accordance with one embodiment of the present invention when an E-mail is sent there are distinct stages of a first stage of message paper screen to write the subject line and the message text and to list attachments (if any), a second addressing "to" envelope stage to write the names of the recipients on, and a stuff and send the envelope stage. The addressing step is not permitted until the message is completed and signed.

### Description of Drawing

Figure 1 is a block diagram of a hardware system useful for sending and receiving E-mails;
Figure 2 illustrates the modulator architecture defined by Messaging Application Programming Interface (MAPI);
Figure 3 is a flow chart of the E-mail system according to one embodiment of the present invention.

### Description of Preferred Embodiments

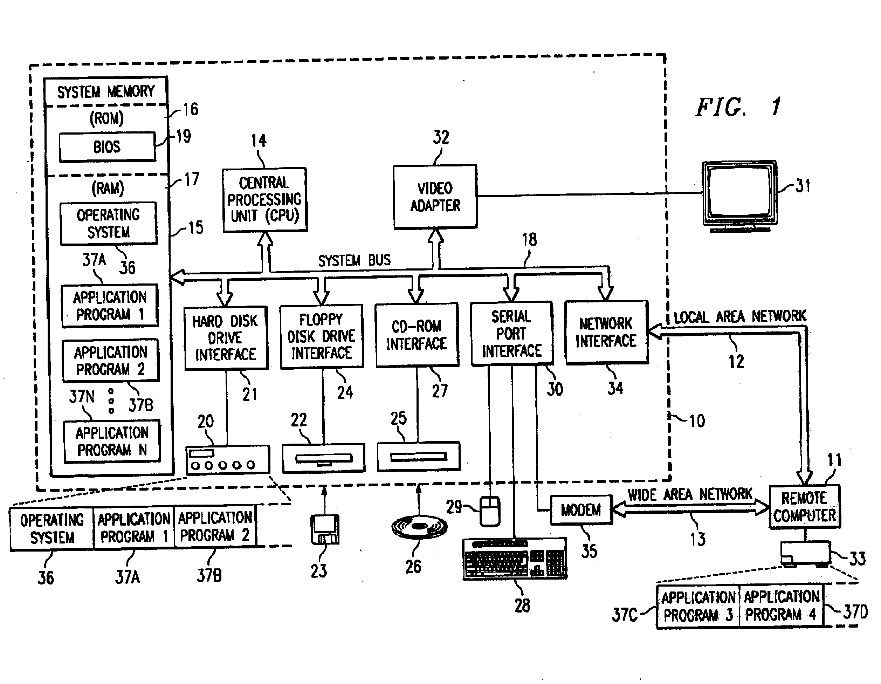

The subject invention may preferably be used in a conventional computer system 10 that communicates with a remote computer by a local network 12 or wide area network 13 as illustrated in Figure 1. The computer 1 includes a central processing unit (CPU) 14 such as a "Pentium" processor manufactured by Intel Corp. of Santa Clara, California. The computer includes system memory 15, read only memory 16 and random access memory 17 connected to the processor 14 by a system bus 18. The memory system 15 includes a BIOS stored in the ROM 16 that has a set of basic routines that assist the transfer of information between elements in the personal computer.

The personal computer 10 includes a local drive 20,a floppy disk drive 22 and a CD-ROM drive unit 25 connected to the bus 18. A monitor 31 or other type of display device is coupled to the bus 18. A keyboard 28 or mouse or other such pointing device is also connected to the bus 18 enables the users to enter commands and data into the system 10.

The remote computer 11 is connected to a remote storage device 33. The personal computer 12 is connected by a network interface 34 to the local network 12 to communicate to the remote processor or via a modem 35 to the wide area network to the remote computer 11 via the serial port. The modem 35 can be connected to the public switched telephone network (PTSN) or a CATV network. Program modules such as operating system 36, application programs and data are provided to the CPU 10 via the hard drive 20, floppy disk 23, ROM 17, RAM 16 and CD ROM and are stored in the memory system 15. When the personal computer is activated the BIOS instructs the CPU 14 to load the operating system from the hard drive, for example, into the RAM 17.

The CPU 14 executes the operating system 36 and produces the visual and sound effects to be displayed on the monitor 31. The operating system 36 provides functions to allow and application program 37 to work with various types of input/output. The application program 37 issues, for example, function calls that causes the operating system 36 to perform steps to various tasks such as displaying text on the monitor or printing text on an attached printer. A well known program for E-mail is the Microsoft Outlook program. A description of the "Microsoft Outlook" is available in publication published by Microsoft Corporation of Redmond, Washington. Descriptions are also found in patents such as U.S. Patent No. 5,923,848 of Goodhand et al.; U.S. Patent No. 6,057,841 of Thurlow et al.; and U.S. Patent No. 6,134,582 of Kennedy. These patents are incorporated herein by reference.

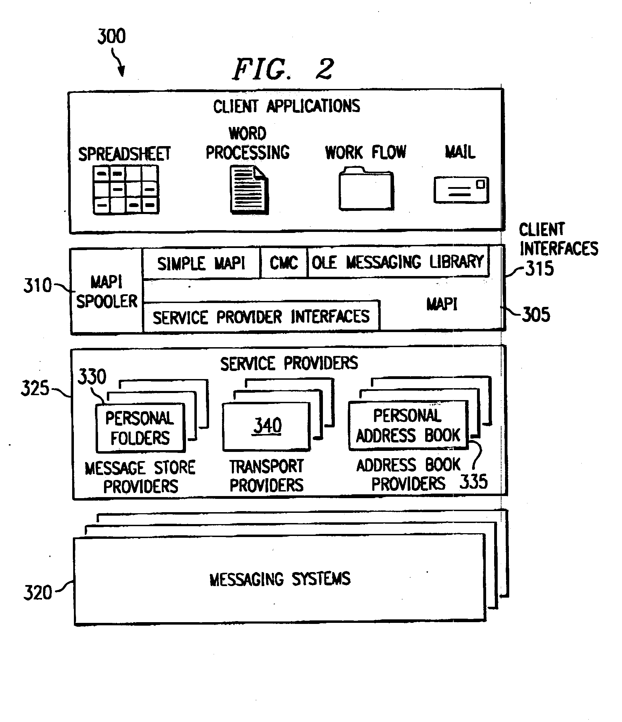

The preferred operating system 36 may use Messaging Application Programming Interface (MAPI) that makes it easy for programmers to write message-enabling applications. The code provides functions for sending ,receiving and addressing messages. Figure 2 illustrates the MAPI subsystem. Client applications 300 such as Spreadsheet, word processing, E-mail and work flow use the MAPI subsystem. The MAPI subsystem includes a MAPI spooler 310,a common user interface and programming interfaces 315. The spooler 310 is a separate interface is responsible for sending and receiving messages from a message system. The common user interface is a set of dialog boxes that gives client applications a consistent look and uses a consistent way to perform tasks. The main programming interface herein referred as the MAPI programming interface may be based on the OLE Component Object model. The client application may also use a single MAPI, Common Messaging Calls (CMC) and the OLE Messing Library. The spooler 310 runs as a background process and also runs messaging functions such as informing client when a new message is delivered, invoking message preprocessing and past processing and generating reports that indicate message delivered. The MAPI service providers 325 and drivers that connect the client applications 300 to the messaging system 320. The messaging systems include message store providers 330, address book or directory providers 335, and message transport providers. Messages are created using a form that is appropriate for the specific type or class of message. The completed message is addressed to one or more recipients. When the client sends the message, the store provider 330 checks that each recipient has a unique and valid address and that the message has all of the information necessary for transmission. The message is then put in outbound queue. The client E-mail program taught herein can work with the MAPI or similar programs. The forms may be provided or simplify a blank sheet.

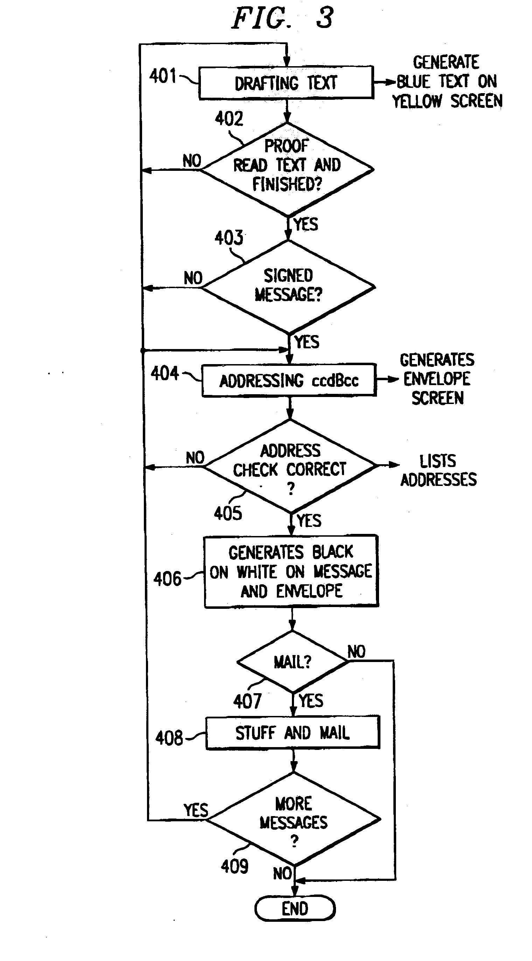

Referring to Figure 3, there is a first or letter step 401. This is the drafting of the message. The system may, for example, display a screen with a yellow paper and text displayed as a dark blue ink. At this stage 401 is drafted the letter or message with the salutation, the subject and body.. The block outline of the salutation subject and body may be generated by the forms program. Also any attachments would be entered. The user would draft the letter on the yellow screen for example with dark blue print by the keyboard for example. The drafting can also be by other means such as a speech recognizer.

The letter or message is not complete until it is signed by the author. The signing can be simply completing the message and acknowledging it is completed and proofread. The signing of the letter or message would not be complete until the author has finished and proofread it. The author would be prompted to acknowledge it is finished and proofread in step 402 before signing. Until it is signed it would not progress any further to the next stage. A Step 403 may be provided acknowledging it is signed. If it is not signed and proofread it returns to the drafting step 401. The signing can also be by typing in a spot on the form called "signature" or placing a checkmark on a the draft form.
Once signing the letter (step 403) the system automatically brings next to finish the message by addressing. An envelope screen is generated and presented on the display (Step 404) to write to a list of names. This may also be a yellow screen for the envelope. The envelope and the listing of addresses is not presented until the letter or message is signed and finished. The address can come from a stored list of names or enter new original names.

A check Step 405 checks the addresses to make sure they are correct. A list of the addresses and whether full or blind copies are to be provided. The listing includes a list of names of who does and who does not get the attachments if any. Also a check is made to be sure the addresses match the salutation. If this is not correct the system goes back to Step 404 for addressing or step 401 to correct the salutation. If the user after review agrees with the addressing by a "yes" condition the system proceeds to the next Step 406. In the optional step 406 the letter or message and the envelope turns white for the cc and bcc after being signed and the envelopes are all addressed correctly A Step 407 may be provided to query author whether the mail should be sent.

The last stage 408 is the stuff and mail stage which can only take place after the signing, after all of the envelopes are addressed correctly and at step 407 the author has positively answered the query to send the message or letter.

If a reply (as opposed to a fresh letter or message ) is being composed, lists of addresses on all envelopes can be automatically imported or can be re-arranged (for example same original "to" become cc etc. ) and changed or augmented. There would be the Steps of 403 through 408 to make sure the reply was signed, and addresses were correct and as to who gets a full copy of attachments and who does not.

The system would also query if there were more messages in Step 409 and if so the program would not end but would cycle back to Step 401.

## Claims

1. A method of generating an E-mail message comprising:
generating a draft of the message, proofreading the draft, signing the draft, only after signing the draft permitting addressing of the message and only after addressing the message and signing the draft permitting sending the E-mail.

2. The method of Claim 1 including the step of sending the E-mail only after signing the draft and the addressing is complete.

3. The method of Claim 1 wherein said draft is placed on a colored screen that changes color after signing the draft.

4. The method of Claim 3 wherein said draft changes color after the addressing the envelopes.

5. The method of Claim 1 wherein said signing includes acknowledging it is signed.

6. The method of Claim 1 wherein acknowledging includes placing a label indicating a signature.

7. The method of Claim 6 wherein said label includes a marking on a form.

8. The method of Claim 1 wherein said addressing includes a checking step of providing a list of addresses and an indication of who gets full copies and who does not.
